Europäisches Patentamt

European Patent Office

Office européen des brevets

(11) Numéro de publication: **0 243 568**
**A2**

(12) # DEMANDE DE BREVET EUROPEEN

(21) Numéro de dépôt: **86870180.6**

(22) Date de dépôt: **03.12.86**

(51) Int. Cl.4: **F21S 3/00** , G02B 21/06 , G02B 6/04

(30) Priorité: **30.04.86 BE 216614**

(43) Date de publication de la demande:
**04.11.87 Bulletin 87/45**

(84) Etats contractants désignés:
**CH DE FR GB LI NL**

(71) Demandeur: **Siemens Aktiengesellschaft Berlin und München Wittelsbacherplatz 2 D-8000 München 2(DE)**

(72) Inventeur: **Defour, Octave M. Rue Belle-Jardinière 263 B-4900 Angleur(BE)**

(74) Mandataire: **Stadtmüller, Helmut SIEMENS AG Vertrags- und Patentabteilung Postfach 32 40 D-8520 Erlangen(DE)**

(54) **Dispositif d'illumination sélective.**

(57) Le dispositif comprend une enceinte (1) entourée par une paroi latérale opaque (2), plusieurs dispositifs optiques disposés le long et à l'extérieur de la paroi latérale, chaque dispositif optique comprenant des moyens (4-7) pour engendrer un flux lumineux concentré en un pinceau mince faiblement divergent ayant des bords nets, qui crée un volume d'air intérieur à fort éclairement séparé d'une zone extérieure sombre (10) par un plan très net (9).

FIG. 1

EP 0 243 568 A2

## Dispositif d'illumination sélective

La présente invention concerne un dispositif permettant l'illumination sélective d'une surface plane afin de mettre en évidence les excroissances portées par ladite surface plane.

Une application typique d'un tel dispositif est l'inspection de cartes à circuits imprimés équipées de broches traversantes au moyen d'une caméra et d'un système d'analyse d'images.

Le dispositif selon l'invention comprend une enceinte entourée par une paroi latérale opaque, plusieurs dispositifs optiques disposés le long et à l'extérieur de la paroi latérale, chaque dispositif optique comprenant des moyens pour engendrer un flux lumineux concentré en un pinceau mince faiblement divergent ayant des bords nets, qui crée un volume d'air intérieur à fort éclairement séparé d'une zone extérieure sombre par un plan très net.

Suivant un mode d'exécution exemplaire, le dispositif optique comprend des moyens pour engendrer un flux lumineux concentré dirigé parallèlement à la paroi latérale et un prisme à réflexion totale disposé de manière à avoir une partie d'une face verticale en regard d'une fenêtre étroite et de manière à recevoir ledit flux lumineux concentré et à le réfléchir en un pinceau mince faiblement divergent dirigé pratiquement parallèlement à un plan perpendiculaire à l'axe de l'enceinte.

L'invention est exposée dans ce qui suit sur un mode d'exécution exemplaire avec référence aux dessins ci-annexés dans lesquels:

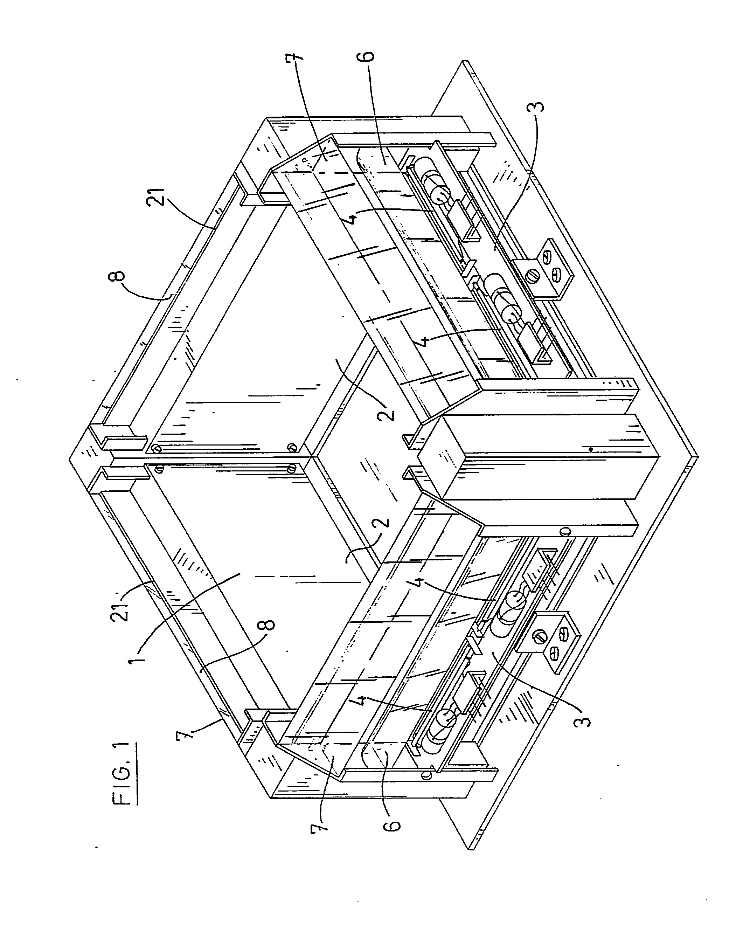

. la figure 1 est une vue schématique en perspective d'un mode d'exécution exemplaire selon l'invention,

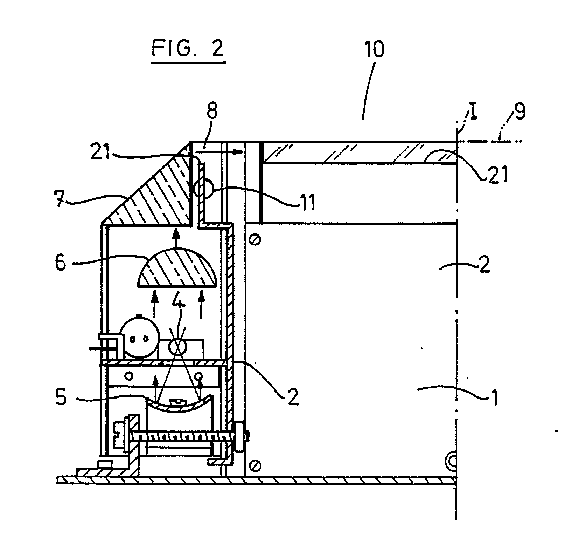

. la figure 2 est une vue en coupe suivant la ligne II-II de la figure 1.

Se reportant à la figure 1 on voit un dispositif ou bac à lumière selon l'invention, de forme générale parallélipipédique, qui présente des faces latérales 2 opaques. Le volume intérieur du bac est destiné à recevoir un appareillage d'observation ou d'inspection quelconque. Les faces latérales 2 sont avantageusement montées de manière à pouvoir pivoter autour des pivots 11 (visibles sur la figure 2).

Le but de l'invention est de créer un pinceau de lumière mince ayant une faible divergence et des bords nets afin de créer un volume d'air à forte luminosité diffuse séparé d'une zone extérieure sombre par un plan très net. Pour ce faire, les faces latérales du bac ou certaines d'entre elles portent extérieu rement un dispositif optique qui est représenté à la figure 2.

Sur une console 3 portée par la face opaque 2 est montée une source lumineuse 4 constituée par exemple de plusieurs tubes alignés suivant la ligne focale d'un réflecteur concave 5. La source lumineuse 4 est raccordée à un dispositif d'alimentation approprié (non montré). Les sources lumineuses réparties sur les faces latérales peuvent être allumées individuellement ou par groupes et elles peuvent être allumées de manière fixe ou par éclats. Au-dessus des tubes lumineux 4 est disposée une lentille 6 pour condenser le flux lumineux renvoyé par le réflecteur 5 en un pinceau lumineux qui pénètre dans un prisme à réflexion totale 7 positionné de telle façon que sa face verticale dépasse légèrement le bord supérieur 21 de la paroi opaque 2, une partie de la face verticale du prisme se trouvant ainsi en regard d'une fenêtre étroite 8. Un pinceau de lumière mince faiblement divergent et à bords nets se trouve ainsi dirigé à travers la fenêtre étroite 8 pratiquement parallèlement au plan 9 perpendiculaire à l'axe I du bac à lumière 1.

La lumière du pinceau mince précité ne sort pas du bac à lumière et l'intensité lumineuse élevée, alliée à une densité lumineuse constante sur tout le champ éclairé, permettent de créer une zone de transition très nette, parallèle au plan 9, qui sépare l'espace intérieur 1 à fort éclairement diffus d'une zone extérieure sombre 10.

Le mince pinceau lumineux à forte intensité est capable d'illuminer sélectivement toute excroissance portée par une surface plane quelconque s'étendant dans le plan de séparation 9 précité, ce qui permet de repérer très simplement les excroissances de manière visuelle ou par capteur. Ainsi, par exemple, en plaçant une carte à circuit imprimé avec une face située pratiquement dans le plan 9, les broches traversantes des composants électroniques montés sur la carte se trouvent-elles illuminées sélectivement de sorte qu'elles peuvent être facilement repérées et identifiées par rapport à la surface de la carte qui est pourtant plus réfléchissante, et elles peuvent être identifiées aussi par rapport aux broches engagées dans leur logement mais qui ne traversent pas la carte.

Il est bien entendu que l'application du dispositif selon l'invention n'est pas limitée au domaine de l'inspection de cartes électroniques.

## Revendications

1. Dispositif d'illumination sélective comprenant une enceinte (1) entourée par une paroi latérale (2) opaque, plusieurs dispositifs optiques disposés

**0 243 568**

le long et à l'extérieur de la paroi latérale (2), chaque dispositif optique comprenant des moyens (4-7) pour engendrer un flux lumineux concentré en un pinceau mince faiblement divergent ayant des bords nets, qui crée un volume d'air intérieur à fort éclairement séparé d'une zone extérieure sombre (10) par un plan net (9).

2. Dispositif selon la revendication 1, caractérisé en ce que le dispositif optique comprend des moyens (4, 5, 6) pour engendrer un flux lumineux concentré dirigé parallèlement à la paroi latérale (2) et un prisme à réflexion totale (7) disposé de manière à avoir une partie d'une face verticale en regard d'une fenêtre étroite (8) et de manière à recevoir ledit flux lumineux concentré et à le réfléchir en un pinceau mince faiblement divergent dirigé pratiquement parallèlement à un plan (9) perpendiculaire à l'axe (1).

3. Dispositif selon la revendication 2, caractérisé en ce que l'enceinte (1) a une forme générale parallélipipédique, les sources lumineuses (4) étant réparties sur les faces latérales (2), les sources lumineuses (4) étant raccordées à un dispositif d'alimentation agencé pour allumer les sources lumineuses individuellement ou par groupes.

4. Dispositif selon la revendication 2 ou 3, caractérisé en ce que les sources lumineuses (4) sont des éléments longilignes disposés le long de la ligne focale d'une lentille cylindrique (5), de type condenseur.

5. Dispositif selon l'une quelconque des revendications 2 à 4, caractérisé en ce que les faces latérales (2) sont pivotantes.

FIG. 1

## FIG. 2